(19)

**Europäisches Patentamt**

**European Patent Office**

**Office européen des brevets**

(11)    **EP 4 260 554 B1**

(12)    **EUROPEAN PATENT SPECIFICATION**

(45) Date of publication and mention
of the grant of the patent:
**08.10.2025   Bulletin 2025/41**

(21) Application number: **21830998.7**

(22) Date of filing: **07.12.2021**

(51) International Patent Classification (IPC):
*H04N 13/128* (2018.01)        *G06T 7/55* (2017.01)
*G06T 5/50* (2006.01)         *H04N 13/00* (2018.01)
*G06T 7/11* (2017.01)         *G06T 7/136* (2017.01)

(52) Cooperative Patent Classification (CPC):
**H04N 13/128; G06T 7/11; G06T 7/136;**
G06T 2207/10028; H04N 2013/0081;
H04N 2013/0092

(86) International application number:
**PCT/EP2021/084516**

(87) International publication number:
**WO 2022/122701 (16.06.2022 Gazette 2022/24)**

(54)    **APPARATUS AND METHOD FOR PROCESSING A DEPTH MAP**

VORRICHTUNG UND VERFAHREN ZUR VERARBEITUNG EINER TIEFENKARTE

APPAREIL ET PROCÉDÉ DE TRAITEMENT D'UNE CARTE DE PROFONDEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **09.12.2020   EP 20212857**

(43) Date of publication of application:
**18.10.2023   Bulletin 2023/42**

(73) Proprietor: **Koninklijke Philips N.V.
5656 AG Eindhoven (NL)**

(72) Inventor: **VAREKAMP, Christiaan
5656 AG Eindhoven (NL)**

(74) Representative: **Philips Intellectual Property &
Standards
High Tech Campus 52
5656 AG Eindhoven (NL)**

(56) References cited:
**EP-A1- 3 396 949         WO-A1-2020/178289
WO-A2-2009/004527**

**Description**

FIELD OF THE INVENTION

The invention relates to an apparatus and method for processing a depth map and in particular, but not exclusively, to processing of a depth map to perform multi-view depth/ disparity estimation.

BACKGROUND OF THE INVENTION

Traditionally, technical processing and use of images has been based on two-dimensional imaging but increasingly the third dimension is being explicitly considered in image processing.

For example, three dimensional (3D) displays have been developed which add a third dimension to the viewing experience by providing a viewer's two eyes with different views of the scene being watched. This can be achieved by having the user wear glasses to separate two views that are displayed. However, as this may be considered inconvenient to the user, it is in many scenarios preferred to use autostereoscopic displays that use means at the display (such as lenticular lenses, or barriers) to separate views, and to send them in different directions where they individually may reach the user's eyes. For stereo displays, two views are required whereas autostereoscopic displays typically require more views (such as e.g. nine views).

Another example is a free viewpoint use case which allows (within limits) the spatial navigation of a scene captured by multiple cameras. This can e.g. be either done on a smartphone or tablet and may provide a game-like experience. As an alternative, the data can be viewed on an Augmented Reality (AR) or Virtual Reality (VR) headset.

In many applications it may be desirable to generate view images for new viewing directions. Whereas various algorithms are known for generating such new view images based on an image and depth information, they tend to be highly dependent on the accuracy of the provided (or derived) depth information.

Indeed, three dimensional image information may be provided by a plurality of images corresponding to different view directions for a scene. Such information can be captured using dedicated 3D camera systems that capture two or more simultaneous images from offset camera positions.

However, in many applications, the provided images may not directly correspond to the desired directions, or more images may be required. For example, for autostereoscopic displays, more than two images are required, and indeed often 9 - 26 view images are used.

In order to generate images corresponding to different view directions, view point shifting processing may be employed. This is typically performed by a view shifting algorithm which uses an image for a single view direction together with associated depth information (or possibly multiple images and associated depth information). However, in order to generate new view images without significant artefacts, the provided depth information must be sufficiently accurate.

Other exemplary applications include virtual reality experiences where right eye and left eye views may continuously be generated for a virtual reality headset to match the movement and change of orientation by the user. Such generation of dynamic virtual reality views may in many cases be based on light intensity images in combination with associated depth maps providing the relevant depth information.

The quality of the presented three-dimensional image/ images from new views depends on the quality of the received image and depth data, and specifically the three dimensional perception depends on the quality of the received depth information. Other algorithms or processing are known that rely on depth information for images and these tend to also be highly sensitive to the accuracy and reliability of the depth information.

However, in many practical applications and scenarios the provided depth information tends to be suboptimal. Indeed, in many practical applications and use scenarios, the depth information may not be as accurate as desired, and this may result in errors, artefacts and/or noise being introduced in the processing and to the generated images.

In many applications, depth information describing a real world scene may be estimated from depth cues that are determined from captured images. For example, depth information may be generated by estimating and extracting depth values by comparing view images for different view positions.

For example, in many applications, three dimensional scenes are captured as stereo images using two cameras at slightly different positions. Specific depth values may then be generated by estimating disparities between corresponding image objects in the two images. However, such depth extraction and estimation is problematic and tends to result in non-ideal depth values. This may again result in artefacts and a degraded three dimensional image quality.

In order to improve the depth information, a number of techniques for post-processing and/or improving depth estimation and/or depth maps have been proposed. However, these all tend to be suboptimal and tend to not be optimally accurate and reliable, and/or may be challenging to implement, e.g. due to the required computational resource. Examples of such algorithms are provided in WO2020/178289A1 and EP 3 396 949A1. WO 2020/178289 A1 discloses a method of processing depth maps that comprises receiving images and corresponding depth maps. The depth values of a first depth map of the corresponding depth maps are updated based on depth values of at least a second depth map of the corresponding depth maps. The updating is based on a weighted combination of candidate depth values determined from other maps. A weight for a candidate depth value from the second depth map is determined based on the similarity between a pixel value in the first image corresponding to the depth being updated and a pixel value in a third image at a position determined by projecting the position of the depth value being updated to the third image using the candidate depth value. More consistent depth maps may be generated in this way.

WO 2009/004527 A2 discloses a system for computing a depth map comprising depth values representing distances to a viewer for respective pixels of an image. The system comprises an optimization unit for determining a depth related cost value of a current pixel, the depth related cost value being a minimal cost value among a plurality of candidate cost values, wherein at least one of the candidate cost values is based on a depth related cost value of at least one pixel in a local neighborhood of the current pixel and on a difference between a color attribute of the at least one pixel in the local neighborhood and a corresponding color attribute of the current pixel, and at least one of the candidate cost values is based on a depth related cost value relating to at least one pixel outside the local neighborhood. A selector randomly selects the latter at least one pixel.

A particular approach has been suggested where a depth map may be initialized and subsequently iteratively updated using a scanning approach where the depth of a current pixel is updated based on a candidate set of candidate depth values which are typically the depth values for neighboring pixels. The update of the depth value for the current pixel is dependent on a cost function. However, although such an approach may improve a depth map in many scenarios, it tends not to be optimal in all scenarios including not always generating optimally accurate depth maps. It also tends to be computationally demanding as a large number of candidate pixels must be considered.

Hence, an improved approach for generating/ processing/ modifying depth information would be advantageous and in particular an approach for processing a depth map allowing increased flexibility, facilitated implementation, reduced complexity, reduced resource requirements, improved depth information, more reliable and/or accurate depth information, an improved 3D experience, improved quality of rendered images based on the depth information, and/or improved performance would be advantageous.

SUMMARY OF THE INVENTION

Accordingly, the Invention seeks to preferably mitigate, alleviate or eliminate one or more of the above mentioned disadvantages singly or in any combination. The invention is defined by the independent claims. The dependent claims define advantageous embodiments.

According to an aspect of the invention there is provided a method of processing a depth map, the method comprising: receiving a depth map; for at least a first pixel of the depth map performing the steps of: determining a set of candidate depth values, the set of candidate depth values comprising depth values for other pixels of the depth map than the first pixel; determining a cost value for each of the candidate depth values in the set of candidate depth values in response to a cost function; selecting a first depth value from the set of candidate depth values in response to the cost values for the set of candidate depth values; determining an updated depth value for the first pixel in response to the first depth value; wherein the set of candidate depth values comprises a first candidate depth value along a first direction from the first pixel, and an intervening pixel set along the first direction, a distance from the first pixel to the first candidate depth value being larger than a distance from the first pixel to the first intervening pixel set, wherein the intervening pixel set comprises at least one pixel comprises no candidate depth value of the set of candidate depth values for which the cost function does not exceed the cost function for the first candidate depth value, and the method further comprises determining the first direction as a gravity direction for the depth map; the gravity direction being a direction in the depth map matching a direction of gravity in a scene represented by the depth map.

The invention may improve depth maps leading to improved three-dimensional image processing and perceived rendering quality. In particular, the approach may in many embodiments and scenarios provide a more consistent and/or accurate depth map. The processing may in many embodiments provide an improved depth map while maintaining a sufficiently low complexity and/or resource demand.

An advantage in many embodiments is that the approach may be highly suitable for use with and integration in depth estimation techniques, such as in disparity based depth estimation using stereo- or multi-view images.

The approach may in particular improve depth maps using a relatively low complexity and low resource demanding approach. The approach may for example allow sequential bit scanning and processing with relatively few decisions per pixel being sufficient to increase overall accuracy.

The depth map may indicate depth values for pixels of an image. A depth value may be any value indicative of a depth including e.g. a disparity value, a z-coordinate, or a distance from viewpoint value.

The processing of the first pixel may be iterated with a new pixel of the depth map being selected for each iteration. Selection of the first pixel may be in accordance with a scan sequence for the depth map. A pixel may correspond to a position/ area in the depth map for which the depth value is provided. A pixel in the depth map may correspond to one or more pixels in an associated image for which the depth map indicates the depth. A depth map may be formed by a two-dimensional arrangement of pixels with a depth value being provided for each pixel. Each pixel/ depth value is thus provided for a (pixel) area of the depth map. A reference to a pixel may be a reference to a depth value (for the pixel), and vice versa. A reference to a pixel may be a reference to a position in the depth map for a depth value. Each pixel of the depth map may be linked with one depth value (and vice versa).

A cost function may be implemented as a merit function and a cost value may be indicated by a merit value. Selection of the first depth value in response to cost values may be implemented as a selection of the first depth value in response to merit values determined from a merit function. An increasing merit value/ function is a decreasing cost value/ function. The selection of the first depth value may be a selection of the candidate depth value of the set of candidate depth values which has the lowest cost value, corresponding/ equivalent to selection of the first depth value being a selection of the candidate depth value of the set of candidate depth values which has the highest merit value.

The updated depth value will have a value dependent on the first depth value. This may for some circumstances and for some pixels in some cases result in an updated depth value which is the same as the depth value of the first pixel prior to the processing. In some embodiments, the updated depth value is determined as a function of the first depth value, and specifically as a function that is dependent on no other depth value of the depth map than the first depth value. In many embodiments, the updated depth value may set to be equal to the first depth value.

In some embodiments, the first direction may be the only direction for which an intervening set of pixels as described exists. In some embodiments, the first direction may be a direction of an angular interval of directions from the first pixel for which an intervening set of pixels as described exists. The angular interval may be have a span/ width/ range not exceeding 1°, 2°, 3°, 5°, 10°, or 15°. The first direction may in such embodiments be replaced with a reference to directions within such an angular interval.

The set of candidate depth values may comprise a first candidate depth value along a first direction which is further away from the first pixel than at least one pixel along the first direction which is not included in the set of candidate depth values or which has a higher cost function than the first candidate depth value.

In accordance with an optional feature of the invention, the cost function along the first direction has a monotonically increasing cost gradient as a function of distance from the first pixel for the distance being below a distance threshold and a decreasing cost gradient as a function of distance from the first pixel for at least one distance from the first pixel being above a threshold.

This may provide improved performance and/or implementation in many embodiments. It may ensure that there exists a first intervening pixel set of at least one pixel which comprises no candidate depth value of the set of candidate depth values for which the cost function does not exceed the cost function for the first candidate depth value, a distance from the first pixel to the first candidate depth value being larger than a distance from the first pixel to the first intervening pixel set.

A monotonically increasing gradient as a function of distance is a gradient which always increasing or remains constant for increasing distance.

In accordance with an optional feature of the invention, the first intervening pixel set is a set of pixels for which depth values are not included in the set of candidate values.

This may provide improved performance and/or implementation in many embodiments. It may ensure that there exists a first intervening pixel set of at least one pixel which comprises no candidate depth value of the set of candidate depth values for which the cost function does not exceed the cost function for the first candidate depth value, a distance from the first pixel to the first candidate depth value being larger than a distance from the first pixel to the first intervening pixel set.

In accordance with an optional feature of the invention, the cost function comprises a cost contribution dependent on a difference between image values of multi-view images for pixels that are offset by a disparity matching the candidate depth value to which the cost function is applied.

The approach may be combined with multi-view disparity consideration to provide an advantageous depth estimation approach based on multi-view images. The approach may for example allow an initial depth map to be iteratively updated based on the match between the different images of the multi-view image.

The method comprises determining the first direction as a gravity direction for the depth map; the gravity direction being a direction in the depth map matching a direction of gravity in a scene represented by the depth map.

This may provide a particularly efficient performance and improved depth map, and may exploit typical properties of scenes to provide an improved and often more accurate depth map.

In accordance with an optional feature of the invention, the first direction is vertical direction in the depth map.

This may provide a particularly efficient performance and improved depth map, and may exploit typical properties of scenes to provide an improved and often more accurate depth map.

In accordance with an optional feature of the invention, the method further comprises determining a depth model for at least part of a scene represented by the depth map and wherein the cost function for a depth value is dependent on a difference between the depth value and a model depth value determined from the depth model.

This may provide particularly efficient performance and an improved depth map, and may exploit typical properties of scene objects to provide an improved and often more accurate depth map. The cost function may provide an increasing cost for increasing difference between the depth value and the model depth value.

In accordance with an optional feature of the invention, the cost function is asymmetric with respect to whether the depth value exceeds the model depth value or is below the model depth value.

This may provide a particularly advantageous depth map in many embodiments and scenarios.

In accordance with an optional feature of the invention, the depth model is a background model for the scene.

This may provide a particularly advantageous depth map in many embodiments and scenarios.

In accordance with an optional feature of the invention, the method further comprises including candidate depth values in the set of candidate depth values that are not from the depth map, including at least one depth value of: a depth value from another depth map of a temporal sequence of depth maps, the sequence including the depth map; a depth value independent of a scene being represented by the depth map; and a depth value determined in response to an offset of a depth value for the first pixel.

This may provide a particularly advantageous depth map in many embodiments and scenarios.

In accordance with an optional feature of the invention, the cost function for a depth value is dependent on a type of the depth value, the type being one of a group of types including at least one of: a depth value of the depth map; a depth value of the depth map closer than a distance threshold; a depth value of the depth map farther away than a distance threshold; a depth value from another depth map of a temporal sequence of depth maps including the depth map; a depth value having a scene independent depth value offset relative to a depth value of the first depth value; a depth value independent of a scene being represented by the depth map; and a depth value determined in response to an offset of a depth value for the first pixel.

This may provide a particularly advantageous depth map in many embodiments and scenarios.

In accordance with an optional feature of the invention, the method is arranged to process a plurality of pixels of the depth map by iteratively selecting a new first pixel from the plurality of pixels and performing the steps for each new first pixel.

In accordance with an optional feature of the invention, the set of candidate depth values for a second direction from the first pixel comprises no second candidate depth value for which a pixel set of at least one pixel along the second direction comprises no candidate depth value of the set of candidate depth values for which the cost function does not exceed the cost function for the second candidate depth value, a distance from the first pixel to the second candidate depth value being larger than a distance from the first pixel to the pixel set.

This may provide a particularly advantageous depth map in many embodiments and scenarios. In some embodiments, the first direction may be the only direction for which an intervening set of pixels as described exists.

According to an aspect of the invention there is provided an apparatus for processing a depth map, the apparatus comprising: a receiver for receiving a depth map; a processor for processing the depth damp, the processing comprising: for at least a first pixel of the depth map performing the steps of: determining a set of candidate depth values, the set of candidate depth values comprising depth values for other pixels of the depth map than the first pixel; determining a cost value for each of the candidate depth values in the set of candidate depth values in response to a cost function; selecting a first depth value from the set of candidate depth values in response to the cost values for the set of candidate depth values; determining an updated depth value for the first pixel based on the selected first depth value; wherein the set of candidate depth values comprises a first candidate depth value along a first direction from the first pixel, and an intervening pixel set along the first direction from the first pixel, a distance from the first pixel to the first candidate depth value being larger than a distance from the first pixel to the first intervening pixel set, wehrein the intervening pixel set comprises at least one pixel comprises no candidate depth value of the set of candidate depth values for which the cost function does not exceed the cost function for the first candidate depth value; and the processing further comprising determining the first direction as a gravity direction for the depth map; the gravity direction being a direction in the depth map matching a direction of gravity in a scene represented by the depth map.

These and other aspects, features and advantages of the invention will be apparent from and elucidated with reference to the embodiment(s) described hereinafter.

BRIEF DESCRIPTION OF THE DRAWINGS

Embodiments of the invention will be described, by way of example only, with reference to the drawings, in which

FIG. 1 illustrates an example of a method of processing a depth map in accordance with some embodiments of the invention;

FIG. 2 illustrates an example of an apparatus for processing a depth map in accordance with some embodiments of the invention;

FIG. 3 illustrates an example of some depth maps;

FIG. 4 illustrates an example of some pixels and depth values of a depth map;

FIG. 5 illustrates an example of some pixels and depth values of a depth map;

FIG. 6 illustrates an example of a cost function along a direction for a method in accordance with some embodiments of the invention; and

FIG. 7 illustrates an example of depth maps generated by different processes.

## DETAILED DESCRIPTION OF THE EMBODIMENTS

The following description focuses on embodiments of the invention applicable to processing a depth map for an image and specifically on processing such a depth map as part of a multi-view depth estimation method. However, it will be appreciated that the invention is not limited to this application but may be applied to many other scenarios.

Images representing a scene is today sometimes supplemented by a depth map which provides information of the depth of the image objects in the scene, i.e. it provides additional depth data for the image. Such additional information may allow e.g. view-point shifting, 3D representation, etc. thereby providing a number of additional services. The depth map tends to provide a depth value for each of a plurality of pixels, which are typically arranged in an array with a first number of horizontal rows and a second number of vertical columns. The depth values provide depth information for the pixels of the associated image. In many embodiments, the resolution of the depth map may be the same as the resolution of the image, and thus each pixel of the image may have a one-to-one link to one depth value of the depth map. However, in many embodiments, the resolution of the depth map may be lower than that of the image, and in some embodiments a depth value of the depth map may be common for a plurality of pixels of the image (and specifically the depth map pixels may be larger than the image pixels).

The depth values may be any value indicative of a depth, including specifically a depth coordinate value (e.g. directly providing a z-value for the pixel) or a disparity value. In many embodiments, the depth map may be a rectangular array (with rows and columns) of pixels with each pixel providing a depth (/disparity) value.

The accuracy of the representation of the depth of a scene is a key parameter in the resulting quality of images being rendered and perceived by a user. The generation of accurate depth information is accordingly important. For artificial scenes (e.g. a computer game), it may be relatively easy to achieve accurate values but for applications involving e.g. the capture of real world scenes, this may be very difficult.

A number of different approaches for estimating depth have been proposed. One approach is to estimate disparity between different images capturing the scene from different viewpoints. However, such a disparity estimation is inherently imperfect. Further, the approach requires the scene to be captured from multiple directions which is often not the case, e.g. for legacy captures. Another option is to perform a motion based depth estimation which exploits that motion of image objects (in a sequence of images) will tend to be higher for objects close to the camera than for objects further away (e.g. for a translating camera, possibly after compensation for the actual motion of the corresponding objects in the scene). A third approach is to exploit predetermined (assumed) information of depth in the scene. For example, for outdoor scenes (and indeed for most typical indoor scenes), objects lower in the image tend to be closer than objects higher in the image (e.g. the floor or ground has increasing distance to the camera for increasing height, the sky tends to be further back than the lower ground etc.). Accordingly, predetermined depth profiles may be used to estimate suitable depth map values.

However, most depth estimation techniques tend to result in less than perfect depth estimation and improved and typically more reliable and/or accurate depth values would be advantageous for many applications.

In the following an approach for processing and updating a depth map will be described. The approach may in some embodiments be used as part of a depth estimation, such as specifically a depth estimation algorithm that considers disparity between multiple images capturing the scene from different viewpoints, and indeed the process may be an integrated part of a depth estimation algorithm determining depth from multi-view images. However, it will be appreciated that this is not essential for the approach and that in some embodiments the approach may e.g. be applied as a post-processing of estimated depth maps.

The approach may in many scenarios improve the depth map and provide more accurate depth information. It may further be suitable for combining different depth estimation considerations and approaches, and may be used to improve depth estimation.

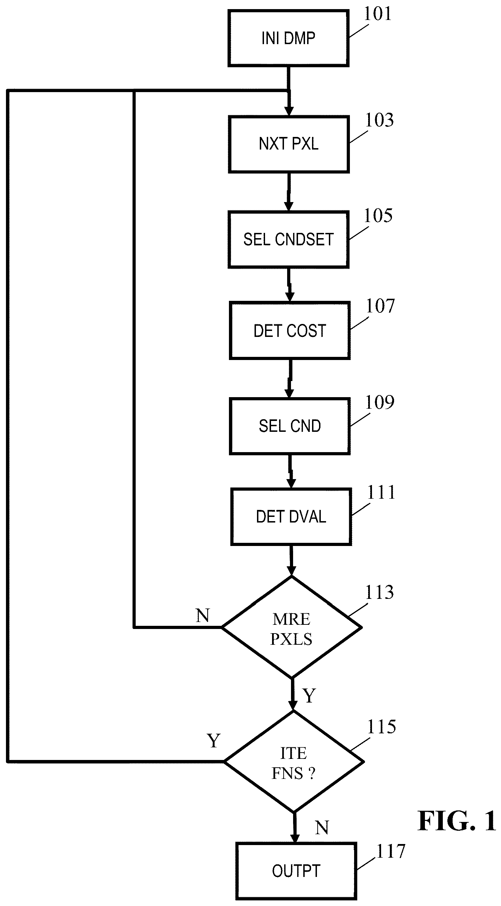

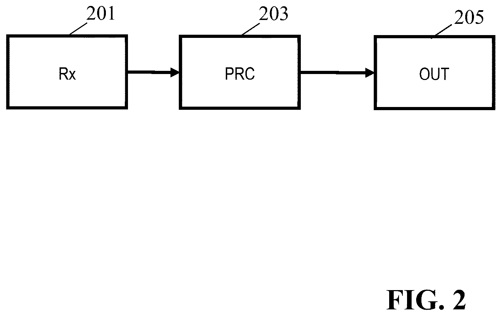

The approach will be described with reference to FIG. 1 which shows a flow chart of a method of processing a depth map and FIG. 2 which illustrates elements of a corresponding apparatus for executing the method.

The apparatus of FIG. 2 may specifically be a processing unit, such as a computer or processing module. As such, it may be implemented by a suitable processor such as a CPU, MPU, DSP or similar. The apparatus may further comprise volatile and non-volatile memory coupled to the processor as will be known to the skilled person. Further, suitable input and output circuitry may be included, such as for example a user interface, network interface, etc.

The method of FIG. 1 initiates in step 101 where the receiver 201 receives a depth map. In many embodiments, the depth map is received together with an associated image. Further, in many embodiments, a depth map is received for an image together with one or more images that may further be associated with separate depth maps. For example, other images may be received representing the scene from different viewpoints. In some embodiments, the image and depth map may be part of a temporal sequence of images and depth maps, such as for example the image being an image or frame of a video sequence. Thus, in some embodiments, the receiver 201 may receive images and/or depth maps for other times. The depth map and image being processed will henceforth also be referred to as the first or current depth map, and the first or current image, respectively.

The received first depth map may be an initial first image which is processed to generate a more accurate depth map and specifically may in some embodiments be an initial input to a depth estimation process. The following description will focus on an example where the method is used as part of a multi-view depth estimation process where the depth estimation includes a consideration of disparity between different images of the same scene from different view-points. This process is initialized with an initial depth map which may provide a very rough indication of the possible depth of the image.

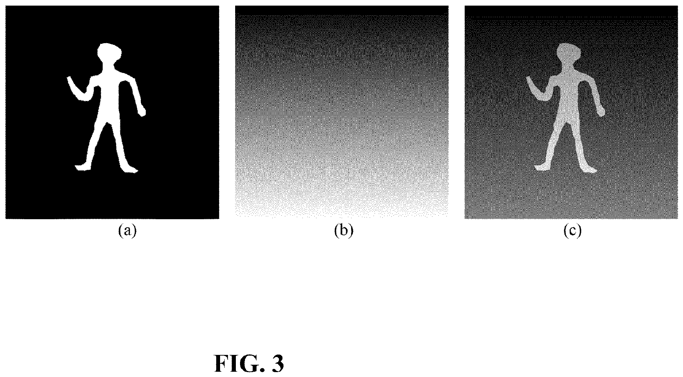

For example, the initial depth map may simply be generated by detecting image objects in the image and dividing the image into image objects and background. The background sections may be assigned a predetermined depth and the image objects may be determined a different predetermined depth indicating that they are further forward, or e.g. a rough disparity estimation may be performed based on a search for the corresponding image object in another image and a resulting estimated depth may be assigned to the entire image object. An example of a resulting depth map is shown in FIG. 3(a).

As another example, a predetermined pattern of depth may be assigned such as an increasing depth for increasing height in the image. An example of such a depth map is illustrated in FIG. 3(b) and may be suitable for e.g. landscape scenes and images. As shown in FIG. 3(c), the approaches may be combined.

In many embodiments, a left/right image pair may be used to initialize a block-based 2D disparity vector field e.g. using an a-prior fitted 3D depth model. In such embodiments, the depth values may be disparity values or depth values directly indicating the distance from the viewpoint may be calculated from these. The approach may take into account some knowledge of the scene geometry such as ground surface and background. For example, based on the 3D model, a 2D disparity field may be generated and used as the initial depth map.

Thus, in the described approach an initial first image with a rough and typically inaccurate initial first depth map is received by the receiver 201, and in the example together with at least one other image representing the scene from a different viewpoint. The approach may then process this depth map to generate a more accurate depth map better reflecting the actual depth of the different pixels of the depth map.

The depth map(s) and (optionally) image(s) are fed from the receiver 201 to a processor 203 which is arranged to perform the remaining method steps as described in the following with reference to FIG. 1.

Although the following approach could in principle be applied to only a subset of the depth values/pixels of the depth map, or indeed in principle to only a single pixel of the depth map, the process is typically applied to all or almost all pixels of the depth map. The application is typically sequential. For example, the process may scan through the depth map sequentially selecting pixels for processing. For example, the method may start from the top left corner and scan first horizontally and then vertically until the pixel at the bottom right corner is processed, i.e. a left-to-right, top-to-bottom scanning may be applied.

Further, in many embodiments, the approach may be iterated and may iteratively be applied to the same depth map. Thus, the resulting depth map from one processing/ update may be used as the input depth map for a subsequent process/ update. In many embodiments, the scanning of a depth map with the resulting update of depth values may be repeated/ iterated a number of times, e.g. 5-10 iterations may be performed.

The method starts in step 101 wherein the receiver 201 receives the depth map as described above and forwards it to the processor 203.

In step 103 the next pixel is selected. When starting the process for a depth map, the next pixel may typically be a predetermined pixel such as the top right pixel. Otherwise, the next pixel may be the next pixel in accordance with an applied sequence of processing, such as specifically a predetermined scan sequence/ order.

For the identified pixel, which henceforth also will be referred to as the first or current pixel, the method then proceeds to determine a depth value for this pixel. The depth value of the first or current pixel will also be referred to as the first or current depth value and the terms initial and updated depth value will be used to refer to respectively the value before and after the processing of the pixel, i.e. to the depth values of the depth map before and after the current iteration respectively.

In step 105, the processor 203 proceeds to determine/ select a set of candidate depth values. The set of candidate depth values is selected to comprise depth values for a set of candidate pixels. The candidate set of pixels of the current depth map includes a number of other pixels in the depth map. For example, the candidate set may be selected to include depth values for pixels in a neighborhood around the current pixel, such as e.g. a set of pixels within a given distance of the current pixel or within a window/ kernel around the current pixel.

In many embodiments, the candidate set of pixels also includes the depth value of the current pixel itself, i.e. the first depth value is itself one of the candidate depth values of the set.

Further, in many embodiments, the set of candidate depth values may also include depth values from other depth maps. For example, in many embodiments where the image is part of a video stream, one or more depth values from prior and/or subsequent frames/ images may also be included in the set of candidate depth values, or depth values from other views for which the depth map is simultaneously estimated may be included.

In some embodiments, the set of candidate depth values may further include values that are not directly the depth values of a depth map. For example, in some embodiments, the set of candidate depth values may include one or more fixed depth values or e.g. relative offset depth values, such as a depth values larger or smaller than the current initial depth value by a fixed offset. Another example, is that the set of candidate depth values may include one or more random or semi-random depth values.

Step 105 is followed by step 107 in which cost values may be determined for the set of candidate depth values, and specifically a cost value may be determined for each candidate depth value of the set of candidate depth values.

The cost value may be determined based on a cost function which may be dependent on a number of different parameters as will be described in more detail later. In many embodiments, the cost function for candidate depth values for pixels of the current depth map depend on a difference between the image values of multi-view images which are offset by a disparity corresponding to the depth value. Thus, for a first depth value, or possibly each candidate depth value of the set of candidate depth values that belong to the set of candidate depth values, the cost function may be monotonically decreasing as a function of a difference between two view images of a multi-view image in image areas having a disparity between the two image views matching the candidate depth value. The image areas may specifically be image areas that include the current pixel and/or the pixel of the candidate depth value. The image area may typically be relatively small such as e.g. comprising no more than say 1%, 2%, 5%, or 10% of the image and/or e.g. not comprising more than 100, 1000, 2000, 5000, or 10000 pixels.

In some embodiments, the processor 203 may for a given candidate depth value determine the disparity between two images which matches the depth value. It may then apply this disparity to identify an area in one of the two images that is offset to an area in the other image by that disparity. A difference measure may be determined between image signal values, e.g. RGB values, in the two areas. Thus, a difference measure may be determined for the two images/ image areas based on the assumption that the candidate depth value is correct. The lower the difference, the more likely it is that the candidate depth value is an accurate reflection of the depth. Thus, the lower the difference measure the lower the cost function.

The image area may typically be a small area around the first/ current pixel, and indeed in some embodiments may only comprise the first/current pixel.

For candidate depth values corresponding to the current depth map, the cost function may accordingly comprise a cost contribution which is dependent on a match between two multi-view images for a disparity corresponding to the candidate depth value.

In many embodiments, the cost value for candidate depth values for other depth maps associated with an image, such as temporally offset depth maps and images, may also include a corresponding image match cost contribution.

In some embodiments, the cost of some of the candidate depth values may not include an image match cost contribution. For example, for a predetermined fixed depth offset which is not associated with a depth map or image, a fixed cost value may for example be assigned.

The cost function may typically be determined such that it is indicative of a likelihood that the depth value reflects the accurate or correct depth value for the current pixel.

It will be appreciated that the determination of a merit value based on a merit function, and/or the selection of a candidate depth value based on merit values, is inherently also a determination of a cost value based on a cost function, and/or the selection of a candidate depth value based on cost values. A merit value can be translated into a cost function simply by applying a function to the merit value where the function is any monotonically decreasing function. A higher merit value corresponds to a lower cost value and e.g. the selection of a candidate depth value with the highest merit value is directly the same as selecting the cost value with the lowest value.

Step 107 of determining a cost value for each candidate depth value of the set of candidate depth values is followed by step 109 where a depth value from the set of candidate depth values is selected in response to the cost values for the set of candidate depth values. The selected candidate depth value will henceforth be referred to as the selected depth value.

In many embodiments, the selection may be a selection of the candidate depth value for which the lowest cost values was determined. In some embodiments, a more complex criterion may be evaluated also considering other parameters (equivalently such considerations may typically be considered part of a (modified) cost function).

Thus, for the current pixel, the approach may select the candidate depth value which is considered to be the most likely to reflect the correct depth value for the current pixel as determined by the cost function.

Step 109 is followed by step 111 in which an updated depth value is determined for the current pixel based on the selected depth value. The exact update will depend on the specific requirements and preferences of the individual embodiment. For example, in many embodiments, the previous depth value for the first pixel may simply be replaced by the selected depth value. In other embodiments, the update may consider the initial depth value, for example the updated depth value may be determined as a weighted combination of the initial depth value and the selected depth value with e.g. the weights being dependent on the absolute cost value for the selected depth value.

Thus, following step 111 an updated or modified depth value has been determined for the current pixel. In step 113 it is evaluated if all the pixels of the current depth map that are to be processed have indeed been processed. Typically, this corresponds to a determination whether all pixels in the image have been processed and specifically a detection of whether the scanning sequence has reached the end.

If not, the method returns to step 103 where the next pixel is selected, and the process is repeated for this next pixel. Otherwise, the method proceeds to step 115 where it is evaluated whether further iterations are to be applied to the depth map. In some embodiments, only one iteration will be performed, and the step 115 is omitted. In other embodiments, the process may iteratively be applied to depth map, e.g. until a certain stop criterion is achieved (such as e.g. the overall amount of changes occurring in the previous iteration is below a threshold) or a predetermined number of iterations have been performed.

If another iteration is required, the method returns to step 103 where the next pixel is determined as the first pixel in a new iteration. Specifically, the next pixel may be the first pixel in the scanning sequence. If no further iterations are required, the method proceeds to step 117 where it finishes with an updated and typically improved depth map. The depth map can e.g. be output to another function, such as a view synthesis processor, via an output circuit 205.

It will be appreciated that whereas the above description focusses on the application to a single pixel, a block process may be applied where for example the determined updated depth value is applied to all depth values within a block comprising the first pixel.

The specific selection of candidate depth values may depend on the desired operation and performance for the specific application. Typically, the set of candidate depth values will include a number of pixels in a neighborhood of the current pixel. A kernel, area, or template may overlay the current pixel and the pixels within the kernel/ area/ template may be included in the candidate set. In addition, the same pixel in a different temporal frame (typically immediately before or after the current frame for which the depth map is provided) is included as well as potentially a kernel of neighborhood pixels which however is typically substantially smaller than the kernel in the current depth map. Typically, at least two offset depth values (corresponding to an increased and decreased depth, respectively) are further included.

However, in order to reduce computational complexity and resource demand, the number of depth values included in the candidate set is typically substantially limited. In particular, as all candidate depth values are evaluated for each new pixel, and typically for all pixels of the depth map for each iteration, each additional candidate value results in a large number of additional processing steps.

However, it has also been found that the improvement of the depth map that can be achieved tends to be highly dependent on the specific choice and weight of candidates and indeed this tends to have a large impact on the final depth map quality. The trade-off between quality/ performance and computational resource requirements is thus very difficult and highly sensitive to the candidate depth value determination.

In many typical applications, it is often preferred to have no more than around 5-20 candidate depth values in the set of candidate depth values for each pixel. In many practical scenarios it is necessary to restrict the number of candidate depth values to around 10 candidates in order to achieve real time processing for video sequences. However, the relatively low number of candidate depth values makes the determination/ selection of which candidate depth values to include in the set highly critical.

An intuitive approach when determining the set of candidate depth values of the depth maps to consider for updating the current depth value is to include depth values close to the current pixels and with the weighting being such that the likelihood of selecting further away depth values is less (or at least not more) likely, i.e. if all other parameters are the same, a candidate depth value closer to the current pixel will be selected over one that is further away. Thus, an intuitive approach would be to generate the set of candidate depth values as a kernel including pixels in a (typically very small) neighborhood around the current pixel and with the cost function monotonically increasing with the distance from the current pixel. For example, the set of candidate depth values may be determined as all pixels within a predetermined distance of, say 1 or 2 pixel distances from the current pixel, and a cost function may be applied which increases with distance from the first pixel.

However, whereas such an intuitive approach may provide advantageous performance in many embodiments, the Inventor has realized that in many applications advantageous performance can be achieved by taking a counterintuitive approach of increasing the bias of selecting a further away pixel along a direction over that of a closer pixel in that direction. In the approach, the probability of selecting a further away pixel is thus increased relative to a closer in pixel along the direction.

In some embodiments, this may be achieved by the set of candidate depth values along the direction being selected/ generated/ created/ determined to include/including one or more further away pixels than one or more pixels that are not included in the set of candidate depth values. For example, the closest one or more pixels along the direction may be included in the set of candidate depth values, followed by one or more pixels that are not included in the set of candidate depth values, and then followed by one or more further away pixels that are included in the set of candidate depth values.

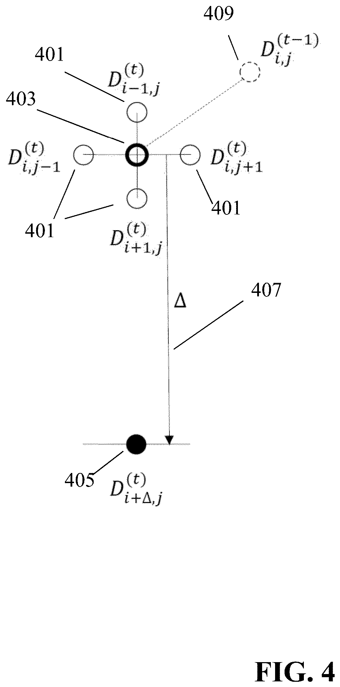

An example of such an approach is shown in FIG. 4. In the example, four neighborhood depth values/ pixels 401 surrounding the current depth value/ pixel 403 are included in the set of candidate depth values. The set of candidate depth values may further be included the current depth value. However, in addition the set of candidate depth values is arranged to include a far away depth value/ pixel 405 along a given direction 407. The far away depth value/ pixel 405 is at a distance of $\Delta$ pixels from the current pixel 403 where $\Delta>2$, and typically much larger. In the example, the set of candidate depth values further includes a depth value for a pixel 409 at the same position in a temporal neighbor depth map.

Thus, in the example, a set of candidate depth values is created including only seven depth values and the system may proceed to determine a cost value by evaluating a cost function for each of these depth values. It may then select the depth value having the lowest cost value and update the current depth value, e.g. by setting this to be the value of the selected candidate depth value. Due to the small number of candidate depth values, a very fast and/or low resource demanding processing can be performed.

Further, despite the constraint in how many candidate depth values are evaluated, the approach of not only including close neighborhood depth values but also one or more far away depth values has in practice been found to provide a particularly advantageous performance that for example often may provide a more consistent and/or accurate updated depth map being generated. For example, many depth values represent objects that are present in the scene and which are substantially at the same distance. Considering a depth value further away may in many situations result in a depth value being included which belongs to the same object but which may provide better depth estimation, e.g. due to less local image noise. The consideration of a specific direction may reflect a likely property of the object, such as for example a geometric property or a relation to the capture orientation for the images. For example, for backgrounds, depth tends to be relatively constant horizontally but vary vertically and accordingly identifying a further away pixel in a horizontal direction may increase the likelihood that both the current pixel and the further away pixel represent the same (background) depth.

Thus, in some embodiments, the set of candidate depth values may be determined to include a first candidate depth value along a direction from the current pixel which is further away than an intervening set of pixels along the direction where the intervening set comprises one or more pixels that are closer to the current pixel than the first candidate depth value but for which the depth value is not included in the candidate depth value. In some embodiments, there is accordingly a gap along the direction between the pixel position of the first candidate depth value and the current pixel in which there is one or more pixels that are not included in the set of candidate depth values. In many embodiments, the gap may be between the first candidate depth value and one or more close neighborhood pixels that are included in the set of candidate depth values.

In some embodiments, the candidate set may be adapted based on an image object or image object type that the current pixel belongs to. For example, the processor 203 may be arranged to perform an image object detection process to detect image objects in the depth map (e.g. by detecting them in the associated image). It may then adjust the candidate set dependent on the detected image objects. In addition, in some embodiments, the first direction may be adapted in response to a property of an image object to which the current pixel belongs. E.g. it may be known that the pixel belongs to a specific image object or object type and the first direction may be determined in response to a property of this object, such as e.g. a longest direction for the image object. For example, a boat on the water will tend to have a substantially longer extension in the horizontal than vertical direction, and accordingly the first direction may be determined as the horizontal direction. In addition, a candidate set may be selected which extends further in the horizontal direction than in the vertical direction.

In some embodiments, the system may detect objects of a certain type (cars, planes, etc.) and may proceed to adjust the candidate set based on the category of the pixel as classified.

In some embodiments, the increased weighting of at least one further away depth value than a closer depth value along the direction may not be achieved by excluding one or more pixels along the direction from being included in the set of candidate depth values. In some embodiments, all pixels along the first direction may be included from the current pixel to the further away pixel, henceforth referred to as the first candidate depth value and first candidate pixel respectively.

In such embodiments, the increased bias of the first candidate depth value over depth values belonging to the intervening set of candidate depth values with lower bias may be achieved by designing the cost function appropriately. Specifically, the cost function may be such that the cost function is lower for the first candidate depth value than the cost function for one or more depth values closer to the first pixel.

In some embodiments, the cost function along the direction may have a monotonically increasing cost gradient with respect to a distance from the first pixel to the candidate depth value for which the cost function is evaluated for the distance being below a distance threshold and a decreasing cost gradient with respect to the distance for at least one distance from the first pixel being above a threshold. Thus, until the distance threshold, the cost function increases, or is constant, with increasing distance to the first pixel. However, for at least one distance exceeding the distance threshold, the cost function instead decreases.

For example, the distance threshold may correspond to a distance to the last pixel of the intervening set. The cost function may thus increase (or be constant) for pixels up to and including the farthest pixel of the intervening set. However, the cost gradient with distance between this farthest pixel and the first candidate pixel decreases. The cost function for the first candidate depth value is thus lower than at least one pixel along the direction which is closer to the current pixel.

A cost function for one pixel being smaller or lower than for another pixel means that the resulting cost value determined by the cost function is smaller/ lower for all other parameters being the same, i.e. for all parameters other than the position being for the two pixels being the same. Similarly, a cost function for one pixel being larger or higher than for another pixel means that the resulting cost value determined by the cost function is larger/ higher for all other parameters being considered for the two pixels being the same. Also, a cost function for one pixel exceeding another pixel means that the resulting cost value determined by the cost function exceeds the other for all other parameters being considered for the two pixels being the same.

For example, the cost function typically considers a number of different parameters, e.g. a cost value may be determined as $C=f(d,a,b,c,...)$ where $d$ refers to the position of the pixel relative to the current pixel (such as the distance) and $a,b,c...$ reflect other parameters that are taken into account, such as the image signal values of the associated images, the value of other depth values, a smoothness parameter etc.

The cost function $f(d,a,b,c,...)$ for pixel A is lower than for pixel B if $C=f(d,a,b,c,...)$ is lower for pixel A than for pixel B if parameters $a,b,c,...$ are the same for the two pixels (and similarly for the other terms).

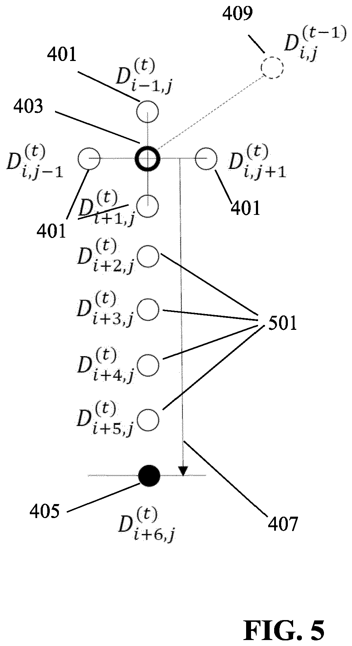

An example of using the cost function to bias a further away pixel is illustrated in FIG. 5. The example corresponds to the example of FIG. 4 but with the set of candidate depth values further comprising all pixels along the direction, i.e. also including pixels 501-507. However, in the example, the cost function is arranged such that it biases the first candidate depth value higher than some intervening pixels, and specifically of pixels 501-507.

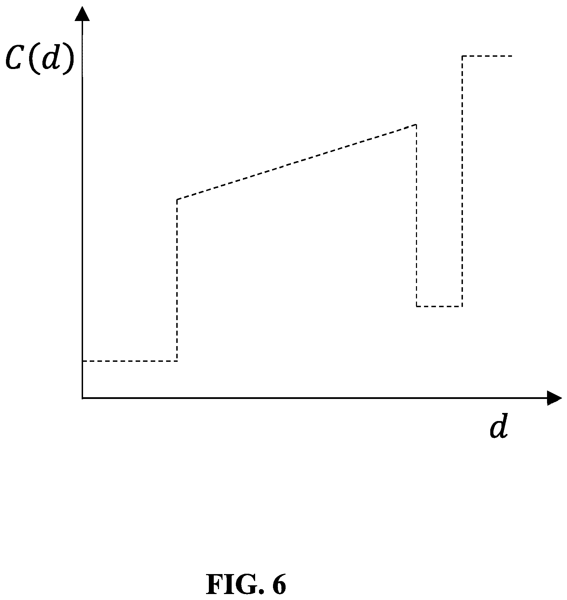

An example of a possible cost function and the dependency on the distance $d$ from the first pixel is illustrated in FIG. 6. In the example, the cost function is very low for the neighbor pixel 401 and then increases with distance for pixels 501. However, for the first candidate pixel, the cost function decreases relative to pixels 501 but still remains higher than for the neighbor pixel 401. Thus, by applying this cost function, the first candidate depth value is biased higher than the intervening pixels 501 but not as much as the neighbor pixel 401.

Thus, in the approach the set of candidate depth values comprises a first candidate depth value along a first direction from the first pixel which is at a larger distance from the current pixel than an intervening pixel set. The intervening pixel set comprises at least one pixel and all pixels of the intervening set are either not included in the set of candidate depth values or have a higher cost function than the first candidate depth value. Thus, the intervening pixel set comprises no candidate depth value for which the cost function does not exceed the cost function for the first candidate depth value. Accordingly, the set of candidate depth values comprises a first candidate depth value along a first direction which is further away from the first pixel than at least one pixel along the first direction which is not included in the set of candidate depth values or which has a higher cost function than the first candidate depth value.

In some embodiments, this may directly correspond to the intervening pixel set being a set of pixels for which depth values are not included in the set of candidate values. In some embodiments, this may directly correspond to the intervening set comprising at least one candidate pixel/ depth value for which the cost function exceeds the cost function of the first candidate depth value. In some embodiments, this may directly correspond to the cost function along the direction having a monotonically increasing cost gradient with respect to a distance from the first pixel to the candidate depth value (for which the cost value is determined) for the distance being below a distance threshold and a decreasing cost gradient with respect to the distance for at least one distance from the first pixel being above a threshold.

The exact cost function will depend on the specific embodiment. In many embodiments, the cost function comprises a cost contribution which is dependent on a difference between image values of multi-view images for pixels that are offset by a disparity matching the depth value. As previously described, the depth map may be a map for an image (or set of images) of a multi-view image set capturing a scene from different viewpoints. There will accordingly be a disparity between the positions of the same object between different images and the disparity is dependent on the depth of the object. Accordingly, for a given depth value, the disparity between two or more images of a multi-view image can be calculated. Accordingly, in some embodiments, for a given candidate depth value, the disparity to other images can be determined and accordingly the position in the other images of the first pixel position under the assumption that the depth value is correct can be determined. The image values, such as the color or brightness values, for one or more pixels in the respective positions can be compared and a suitable difference measure can be determined. If the depth value is indeed correct, it is more likely that the image values are the same, and that the difference measure is small, than if the depth value is not the correct depth. Accordingly, the cost function may include a consideration of the difference between the image values, and specifically the cost function may reflect an increasing cost for an increasing difference measure.

By including such a match criterion, the approach may be used as an integral component of a depth estimation based on disparity between images of a multi-view image. A depth map may be initialized and then iteratively processed with updates biasing towards smaller and smaller image value differences. The approach may thus effectively provide an integrated depth determination and search/match between the different images.

In the approach, a further away depth value in a first direction is accordingly biased/ weighted higher than at least one depth value along the first direction and closer to the first pixel. In some embodiments, this may possibly be the case for more than one direction but in many embodiments it may (only) be the case for one direction or for directions within a small interval, such as for example within a 1°, 2°, 3°, 5°, 10°, or 15° interval. Equivalently, a direction may be considered to have an extent of an angle interval of no more than 1°, 2°, 3°, 5°, 10°, or 15°.

Thus, in many embodiments, the approach is such that for any candidate depth value along a second direction from the first pixel, all depth values along the second direction having a shorter distance to the first pixel belong to the set of candidate depth values and where the cost function along the second direction is monotonically increasing with distance (for all other parameters being the same).

For most embodiments, the set of candidate depth values for a second direction from the first pixel comprises no second candidate depth value for which a pixel set of at least one pixel along the second direction comprises no candidate depth value of the set of candidate depth values for which the cost function does not exceed the cost function for the second candidate depth value, a distance from the first pixel to the second candidate depth value being larger than a distance from the first pixel to the pixel set.

Indeed, typically, only one direction includes candidate depth value that are further away than one or more pixels that are not included in the set of candidate depth values or which are included but have a higher cost function.

The consideration of further away depth values/ pixels being limited to one direction (including potentially a small angle interval) may allow a particularly advantageous performance in many embodiments. It may allow the approach to be adapted to specific properties of the scene that may constrain the consideration of further away pixels to situations for which the further away pixels are particularly likely to potentially reflect the correct depth.

In particular, in many embodiments, the first direction may correspond to a direction of gravity in the depth map/ image/ scene. The inventor has realized that by considering further away pixels along the direction of gravity, an advantageous operation may be achieved as the likelihood of such a depth value being correct is substantially increased.

In particular, the inventor has realized that in many practical scenes, objects may be positioned or stand on a ground and that in such scenes the depth of the entire object typically is comparable to the depth at the part of the object which is furthest in the direction of gravity. The inventor has further realized that this typically translates into a corresponding relationship in the depth maps where the depth values for an object is often more similar to depth values in the direction of gravity in the depth map than depth values in a local neighborhood. For example, for the head of a person standing on a flat surface, the depth will be approximately the same as the depth of the feet. However, the depth of a neighborhood around the head may differ substantially as it may include pixels corresponding to the distant background. Accordingly, a depth processing based only on neighborhood depth is likely to be less reliable and accurate for the head than for the feet. However, the described approach allows for the method to not only include the neighborhood but also further away depth values and pixels in the direction of gravity. For example, when processing depth values for the head of a person, the described approach may result in one candidate depth value being a depth value from the feet of the person (which may be a more accurate reflection of the accurate depth, especially after a few iterations).

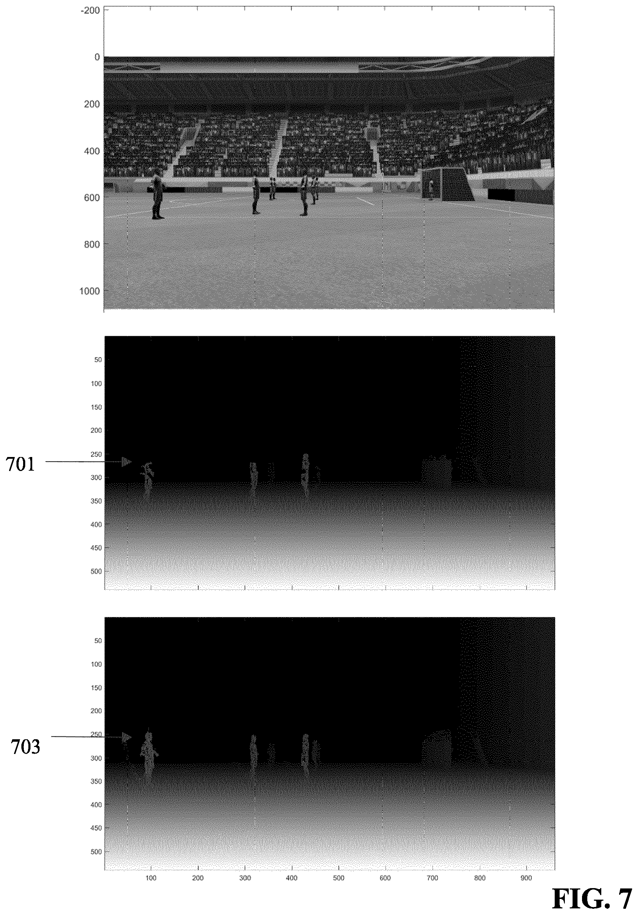

FIG. 7 illustrates an example of the improvement that may be achieved. The figure illustrates the image, the corresponding depth map after application of a corresponding process that does not consider far way gravity direction candidates, and finally the depth map after application of a process that does consider far way gravity direction candidates. Comparing parts 701 and 703 shows that the head of the leftmost player has the wrong depth values in the first example but appropriate depth values in the second example.

In some embodiments, the direction of gravity in the depth map may be predetermined and the first direction may be predetermined. In particular, for many typical depth maps and images, a horizontal capture is performed (or postprocessing is performed to align the horizontal directions of the image and the scene) and the direction may be predetermined as a vertical direction in the depth map/image. In particular, the direction may be a top to bottom direction in the image.

In some embodiments, the processor 203 may be arranged to determine the first direction as the gravity direction in the depth map where the gravity direction in the depth map is a direction corresponding to the direction of gravity in the scene being represented by the depth map.

In some embodiments, such a determination may be based on an evaluation of an input, such as e.g. from a level indicator of the camera that captures the images from which the depth map is updated. For example, if data is received indicating that a stereo camera is at an angle of, say, 30° with respect to the horizontal, the first direction may be determined as the direction offset by 30° relative to the vertical direction in the depth map and images.

In many embodiments, the gravity direction in the depth map may be based on an analysis of the depth map and/or images. For example, the gravity direction may be selected opposite to the vector that points from the center of the image to the average weighted image pixel position with a per pixel weighting that is proportional to the amount of blue of a pixel's color. This is a straightforward way in which a blue sky in a picture is used to determine the gravity direction. Approaches are known to rectify stereo image pairs (or multi view images) such that the so called epipolar lines are horizontal. Gravity may be assumed to be always orthogonal to the epipolar lines.

In some embodiments, the cost function may include a consideration of a depth model for at least part of the scene. In such embodiments, the processor 203 may be arranged to evaluate a depth model to determine an expected depth model. The cost function may then be dependent on a difference between the depth value and a model depth value determined from the depth model.

The depth model may be a model which imposes depth constraints on at least some depth values of the depth map, where the depth constraints may be absolute or relative. For example, the depth model may be a 3D model of a scene object which when projected onto the depth map will result in a corresponding depth relationship between depth values for pixels corresponding to the image object. Thus, the absolute depth of the scene object may not be known but if it is known what type of object is represented by the scene object, a depth relationship can be implied. As another example, the depth model may be a disparity model as estimated for a static ground plane and/or a static background, or may e.g. be a disparity model for a set of dynamically moving planar or cylindrical objects (e.g. representing sports players on a playing field).

The cost function may thus evaluate the model to determine an expected depth value for the candidate depth value in accordance with the depth model. It may then compare the actual depth value to the expected value and determine a cost contribution which is monotonically increasing with an increasing difference (for at least some depth values).

In some embodiments, the cost contribution may be asymmetric and thus be different dependent on whether the depth value is higher or lower than the expected value. For example, a different function may be applied such that depth values that are further away than the model results in a substantially higher cost contribution than depth values that are closer than the model. This will bias the update towards depths that are further forwards than the model. Such an approach may be particularly advantageous when the model is a background model which provides an indication/ estimate of the background depth. In such a case, the cost contribution may make it less likely that the depth map is updated to reflect a depth which results in a perceptually significant artefact/error where an object may be rendered as further back than the depth background.

Indeed in some cases, the cost contribution for a depth value indicating a higher depth than the background depth may be so high that this depth value is highly unlikely to be selected, e.g. the cost contribution from the model comparison may in such a case be set to a very high value (in principle even to infinite).

As an example, the cost contribution for the model evaluation may be given by

$$C_{\text{model}} = \begin{cases} |D_{\text{candidate}} - D_{\text{model}}| & \text{if} \quad z_{\text{candidate}} \leq z_{\text{model}} \\ K & \quad\quad\quad \text{otherwise} \end{cases}$$

where $D_{\text{candidate}}$ is the candidate depth value represented as a disparity, $D_{\text{model}}$ is the model depth value represented as a disparity and $z_{\text{candidate}}$ and $z_{\text{model}}$ are the corresponding depths given as distance from the viewpoint, and where K is a design parameter that can be set to a very high value to avoid that the estimated depth profile is further away from the camera than the fitted model. In that case the fitted model serves as an a-priori background model on top of which the algorithm places the image objects for the depth map. The model contribution further penalizes large disparity deviations from the model.

In some embodiments, only candidate depth values from the depth map itself are considered for the set of candidate depth values. However, in some embodiments, the set of candidate depth values may be generated to include other candidate depth values. As previously mentioned, the set of candidate depth values may include one more depth values from another depth map of a temporal sequence of depth maps including the depth map. Specifically, a depth value from a depth map of the previous and/or subsequent frames in a video sequence may be included. In some embodiments, the set of candidate depth values may include a depth value determined in response to an offset of a depth value for the first pixel. For example, a set of candidate depth values may include a depth value generated by adding a predetermined offset to the depth value for the current pixel and/or depth value generated by subtracting a predetermined offset to the depth value for the current pixel.

The inclusion of different types of depth values may provide improved performance in many applications and scenarios and may specifically often allow a more substantial update with less constraints. Further, the different types of depth values may be included by designing a cost function that considers the potential likelihood of the different types indicating the correct depth for the current pixel. Specifically, the cost function may be dependent on the type of depth value, and thus may take into consideration what type of depth value the cost function is applied to. More specifically, the cost function may take into account whether the depth value is a depth value of the depth map; a depth value of the depth map closer than a distance threshold (e.g. in the immediate neighborhood); a depth value of the depth map farther away than a distance threshold (e.g. a further away pixel along the gravity direction); a depth value from another depth map of a temporal sequence of depth maps including the depth map; a depth value independent of a scene being represented by the depth map; or a depth value determined in response to an offset of a depth value for the first pixel. Of course, in many embodiments only a subset of these will be considered.

As an example, the following cost function may be evaluated for each candidate depth value of the set of candidate depth values:

$$C_{\text{total}} = w_1 C_{\text{match}} + w_2 C_{\text{smoothness}} + w_3 C_{\text{model}} + w_4 C_{\text{candidate}},$$

where $C_{\text{match}}$ is a cost that depends on the match error of the current view with one or more other views, $C_{\text{smoothness}}$ weighs both spatial smoothness and penalizes depth transitions within regions with constant color intensity. A number of different approaches for determining such cost values/ contributions are known to the skilled person and for brevity these will not be described further. Cost component $C_{\text{model}}$ may be the described model cost contribution and may reflect the deviation of the disparity from an a-priori known or estimated disparity model. $C_{\text{candidate}}$ may introduce a cost contribution that is dependent on the type of depth value, such as e.g. whether it is from the same depth map, a temporal neighbor depth map etc.

As an example, $C_{\text{candidate}}$ may be given by:

$$C_{\text{candidate}} = \begin{cases} p_1 & \text{if} \quad \text{a local neighborhood candidate} \\ p_2 & \text{if} \quad \text{a temporal neighbor candidate} \\ p_3 & \text{if} \quad \text{offset depth update candidate} \\ p_4 & \text{if} \quad \text{if a candidate furhter away} \end{cases}$$

where the candidate cost summed over all candidates may equal 1:

$$\sum_k p_k = 1.$$

An example of a typical cost value for the separate candidates may:

$$p_1 = 0, p_2 = 0.05, p_3 = 0.9, p_2 = 0.05$$

The cost for local neighborhood candidates is typically small since such neighbors are very likely good predictors. The same holds for the temporal neighbor candidates but the cost is a bit higher to avoid errors for fast moving objects. The cost for an offset update must be high to avoid the introduction of noise. Finally, the cost of the faraway (gravity) candidate is typically higher than the cost of a normal local neighborhood candidate since the spatial distance is larger. Multiple such candidates at different lower positions (different values for $\Delta$) may be used. In this case we can increase the cost as a function of increasing distance $\Delta$ from the pixel being processed.

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Reference signs in the claims are provided merely as a clarifying example shall not be construed as limiting the scope of the claims in any way.

**Claims**

1. A method of processing a depth map, the method comprising:

receiving a depth map;
for at least a first pixel (403) of the depth map performing the steps of:

determining (105) a set of candidate depth values, the set of candidate depth values comprising depth values for other pixels of the depth map than the first pixel;
determining (107) a cost value for each of the candidate depth values in the set of candidate depth values in response to a cost function;
selecting (109) a first depth value from the set of candidate depth values in response to the cost values for the set of candidate depth values;
determining (111) an updated depth value for the first pixel based on the selected first depth value; characterised

wherein the set of candidate depth values comprises a first candidate depth value (405) along a first direction (407) from the first pixel (403), and an intervening pixel set (501) along the first direction (407) from the first pixel (403), a distance from the first pixel (403) to the first candidate depth value (405) being larger than a distance from the first pixel (403) to the intervening pixel set (501), wherein the intervening pixel set comprises at least one pixel and comprises no candidate depth value of the set of candidate depth values for which the cost function does not exceed the cost function for the first candidate depth value (405); and
the method further comprises determining the first direction as a gravity direction for the depth map; the gravity direction being a direction in the depth map matching a direction of gravity in a scene represented by the depth map.

2. The method of claim 1 wherein the cost function along the first direction has a monotonically increasing cost gradient as a function of distance from the first pixel for the distance being below a distance threshold and a decreasing cost gradient as a function of distance from the first pixel for at least one distance from the first pixel being above a threshold.

3. The method of claim 1 wherein the intervening pixel set is a set of pixels for which depth values are not included in the set of candidate values.

4. The method of any previous claim wherein the cost function comprises a cost contribution dependent on a difference between image values of multi-view images for pixels that are offset by a disparity matching the candidate depth value to which the cost function is applied.

5. The method of any previous claim wherein the first direction is vertical direction in the depth map.

6. The method of any previous claim further comprising determining a depth model for at least part of a scene represented by the depth map and wherein the cost function for a depth value is dependent on a difference between the depth value and a model depth value determined from the depth model.

7. The method of claim 6 wherein the cost function is asymmetric with respect to whether the depth value exceeds the model depth value or is below the model depth value.

8. The method of claim 6 or 7 wherein the depth model is a background model for the scene.

9. The method of any previous claim further comprising including candidate depth values in the set of candidate depth values that are not from the depth map, including at least one depth value of:

a depth value from another depth map of a temporal sequence of depth maps, the sequence including the depth map;
a depth value independent of a scene being represented by the depth map; and
a depth value determined in response to an offset of a depth value for the first pixel.

10. The method of any previous claim wherein the cost function for a depth value is dependent on a type of the depth value, the type being one of a group of types including at least one of:

a depth value of the depth map;
a depth value of the depth map closer than a distance threshold;

a depth value of the depth map farther away than a distance threshold;

a depth value from another depth map of a temporal sequence of depth maps including the depth map;

a depth value having a scene independent depth value offset relative to a depth value of the first depth value;

a depth value independent of a scene being represented by the depth map; and

a depth value determined in response to an offset of a depth value for the first pixel.

11. The method of any previous claim wherein the method is arranged to process a plurality of pixels of the depth map by iteratively selecting a new first pixel from the plurality of pixels and performing the steps for each new first pixel.

12. The method of claim 1 wherein the set of candidate depth values for a second direction from the first pixel comprises no second candidate depth value for which a pixel set of at least one pixel along the second direction comprises no candidate depth value of the set of candidate depth values for which the cost function does not exceed the cost function for the second candidate depth value, a distance from the first pixel to the second candidate depth value being larger than a distance from the first pixel to the pixel set.

13. An apparatus for processing a depth map, the apparatus comprising:

a receiver (201) for receiving a depth map;

a processor (203) for processing the depth damp, the processing comprising:

for at least a first pixel of the depth map performing the steps of:

determining (105) a set of candidate depth values, the set of candidate depth values comprising depth values for other pixels of the depth map than the first pixel;

determining (107) a cost value for each of the candidate depth values in the set of candidate depth values in response to a cost function;

selecting (109) a first depth value from the set of candidate depth values in response to the cost values for the set of candidate depth values;

determining (111) an updated depth value for the first pixel based on the selected first depth value;

characterised wherein the set of candidate depth values comprises a first candidate depth value (405) along a first direction (407) from the first pixel (403), and an intervening pixel set (501) along the first direction (407) from the first pixel (403), a distance from the first pixel (403) to the first candidate depth value (405) being larger than a distance from the first pixel (403) to the intervening pixel set (501), wherein the intervening pixel set comprises at least one pixel and comprises no candidate depth value of the set of candidate depth values for which the cost function does not exceed the cost function for the first candidate depth value (405); and

the processing further comprising determining the first direction as a gravity direction for the depth map; the gravity direction being a direction in the depth map matching a direction of gravity in a scene represented by the depth map.

14. A computer program product comprising instructions which, when the program is executed by a computer, cause the computer to carry out the steps of the method of claim 1.

**Patentansprüche**

1. Verfahren zur Verarbeitung einer Tiefenkarte, wobei das Verfahren Folgendes umfasst:

Empfangen einer Tiefenkarte;

für mindestens ein erstes Pixel (403) der Tiefenkarte Durchführen der folgenden Schritte:

Bestimmen (105) eines Satzes von Kandidaten-Tiefenwerten, wobei der Satz von Kandidaten-Tiefenwerten Tiefenwerte für andere Pixel der Tiefenkarte als das erste Pixel umfasst;

Bestimmen (107) eines Kostenwertes für jeden der Kandidaten-Tiefenwerte in dem Satz von Kandidaten-Tiefenwerten als Antwort auf eine Kostenfunktion;

Auswählen (109) eines ersten Tiefenwertes aus dem Satz von Kandidaten-Tiefenwerten als Antwort auf die Kostenwerte für den Satz von Kandidaten-Tiefenwerten;

Bestimmen (111) eines aktualisierten Tiefenwertes für das erste Pixel basierend auf dem ausgewählten ersten Tiefenwert; gekennzeichnet

wobei der Satz von Kandidaten-Tiefenwerten einen ersten Kandidaten-Tiefenwert (405) entlang einer ersten Richtung (407) von dem ersten Pixel (403) und einen dazwischenliegenden Pixelsatz (501) entlang der ersten Richtung (407) von dem ersten Pixel (403) umfasst, ein Abstand von dem ersten Pixel (403) zu dem ersten Kandidaten-Tiefenwert (405) größer ist als ein Abstand von dem ersten Pixel (403) zu dem dazwischenliegenden Pixelsatz (501), wobei der dazwischenliegende Pixelsatz mindestens ein Pixel umfasst und keinen Kandidaten-Tiefenwert des Satzes von Kandidaten-Tiefenwerten umfasst, für den die Kostenfunktion die Kostenfunktion für den ersten Kandidaten-Tiefenwert (405) nicht übersteigt; und

das Verfahren weiter Bestimmen der ersten Richtung als Schwerkraftrichtung für die Tiefenkarte umfasst; die Schwerkraftrichtung eine Richtung in der Tiefenkarte ist, die mit einer Richtung der Schwerkraft in einer durch die Tiefenkarte repräsentierten Szene übereinstimmt.

2.  Verfahren nach Anspruch 1, wobei die Kostenfunktion entlang der ersten Richtung einen monoton ansteigenden Kostengradienten als eine Funktion des Abstands vom ersten Pixel aufweist, wenn der Abstand unter einem Abstandsschwellenwert ist, und einen abnehmenden Kostengradienten als eine Funktion des Abstands vom ersten Pixel, wenn mindestens ein Abstand vom ersten Pixel über einem Schwellenwert ist.

3.  Verfahren nach Anspruch 1, wobei der dazwischenliegende Pixelsatz ein Satz von Pixeln ist, für die Tiefenwerte nicht in den Satz von Kandidatenwerten eingeschlossen sind.

4.  Verfahren nach einem vorstehenden Anspruch, wobei die Kostenfunktion einen Kostenbeitrag umfasst, der von einer Differenz zwischen Bildwerten von Bildern mit mehreren Ansichten für Pixel abhängt, die um eine Disparität versetzt sind, die mit dem Kandidaten-Tiefenwert übereinstimmt, auf den die Kostenfunktion angewendet wird.

5.  Verfahren nach einem vorstehenden Anspruch, wobei die erste Richtung die vertikale Richtung in der Tiefenkarte ist.

6.  Verfahren nach einem vorstehenden Anspruch, weiter umfassend Bestimmen eines Tiefenmodells für mindestens einen Teil einer durch die Tiefenkarte repräsentierten Szene, wobei die Kostenfunktion für einen Tiefenwert von einer Differenz zwischen dem Tiefenwert und einem aus dem Tiefenmodell bestimmten Modell-Tiefenwert abhängig ist.

7.  Verfahren nach Anspruch 6, wobei die Kostenfunktion asymmetrisch ist in Bezug darauf, ob der Tiefenwert den Modell-Tiefenwert überschreitet oder unter dem Modell-Tiefenwert ist.

8.  Verfahren nach Anspruch 6 oder 7, wobei das Tiefenmodell ein Hintergrundmodell für die Szene ist.

9.  Verfahren nach einem vorstehenden Anspruch, weiter umfassend Einschließen von Kandidaten-Tiefenwerten in den Satz von Kandidaten-Tiefenwerten, die nicht aus der Tiefenkarte sind, einschließlich mindestens eines Tiefenwertes von:

einem Tiefenwert aus einer anderen Tiefenkarte einer temporalen Sequenz von Tiefenkarten, wobei die Sequenz die Tiefenkarte einschließt;
einen Tiefenwert, der unabhängig von einer Szene ist, die durch die Tiefenkarte repräsentiert wird; und
einen Tiefenwert, der als Antwort auf einen Versatz eines Tiefenwertes für das erste Pixel bestimmt wird.

10. Verfahren nach einem vorstehenden Anspruch, wobei die Kostenfunktion für einen Tiefenwert von einem Typ des Tiefenwerts abhängig ist, wobei der Typ einer aus einer Gruppe von Typen ist, die mindestens einen der folgenden Typen einschließt:

einen Tiefenwert der Tiefenkarte;
einen Tiefenwert der Tiefenkarte, der näher als ein Abstandsschwellenwert ist;
einen Tiefenwert der Tiefenkarte, der weiter entfernt ist als ein Abstandsschwellenwert;
einen Tiefenwert aus einer anderen Tiefenkarte einer temporalen Sequenz von Tiefenkarten, die die Tiefenkarte einschließt;
einen Tiefenwert, der einen szenenunabhängigen Tiefenwert aufweist, der relativ zu einem Tiefenwert des ersten Tiefenwertes versetzt ist;
einen Tiefenwert, der unabhängig von einer Szene ist, die durch die Tiefenkarte repräsentiert wird; und
einen Tiefenwert, der als Antwort auf einen Versatz eines Tiefenwertes für das erste Pixel bestimmt wird.

11. Verfahren nach einem vorstehenden Anspruch, wobei das Verfahren angeordnet ist, um eine Vielzahl von Pixeln der Tiefenkarte zu verarbeiten, indem iterativ ein neues erstes Pixel aus der Vielzahl von Pixeln ausgewählt wird und die Schritte für jedes neue erste Pixel durchgeführt werden.

12. Verfahren nach Anspruch 1, wobei der Satz von Kandidaten-Tiefenwerten für eine zweite Richtung von dem ersten Pixel aus keinen zweiten Kandidaten-Tiefenwert umfasst, für den ein Pixelsatz von mindestens einem Pixel entlang der zweiten Richtung keinen Kandidaten-Tiefenwert des Satzes von Kandidaten-Tiefenwerten umfasst, für den die Kostenfunktion die Kostenfunktion für den zweiten Kandidaten-Tiefenwert nicht überschreitet, wobei ein Abstand von dem ersten Pixel zu dem zweiten Kandidaten-Tiefenwert größer ist als ein Abstand von dem ersten Pixel zu dem Pixelsatz.

13. Einrichtung zum Verarbeiten einer Tiefenkarte, wobei die Einrichtung Folgendes umfasst:

einen Empfänger (201) zum Empfangen einer Tiefenkarte;
einen Prozessor (203) zum Verarbeiten der Tiefenkarte, wobei Verarbeiten Folgendes umfasst:
für mindestens ein erstes Pixel der Tiefenkarte Durchführen der folgenden Schritte:

Bestimmen (105) eines Satzes von Kandidaten-Tiefenwerten, wobei der Satz von Kandidaten-Tiefenwerten Tiefenwerte für andere Pixel der Tiefenkarte als das erste Pixel umfasst;
Bestimmen (107) eines Kostenwertes für jeden der Kandidaten-Tiefenwerte in dem Satz von Kandidaten-Tiefenwerten als Antwort auf eine Kostenfunktion;
Auswählen (109) eines ersten Tiefenwertes aus dem Satz von Kandidaten-Tiefenwerten als Antwort auf die Kostenwerte für den Satz von Kandidaten-Tiefenwerten;
Bestimmen (111) eines aktualisierten Tiefenwertes für das erste Pixel basierend auf dem ausgewählten ersten Tiefenwert; gekennzeichnet

wobei der Satz von Kandidaten-Tiefenwerten einen ersten Kandidaten-Tiefenwert (405) entlang einer ersten Richtung (407) von dem ersten Pixel (403) und einen dazwischenliegenden Pixelsatz (501) entlang der ersten Richtung (407) von dem ersten Pixel (403) umfasst, ein Abstand von dem ersten Pixel (403) zu dem ersten Kandidaten-Tiefenwert (405) größer ist als ein Abstand von dem ersten Pixel (403) zu dem dazwischenliegenden Pixelsatz (501), wobei der dazwischenliegende Pixelsatz mindestens ein Pixel umfasst und keinen Kandidaten-Tiefenwert des Satzes von Kandidaten-Tiefenwerten umfasst, für den die Kostenfunktion die Kostenfunktion für den ersten Kandidaten-Tiefenwert (405) nicht übersteigt; und
das Verarbeiten weiter Bestimmen der ersten Richtung als eine Schwerkraftrichtung für die Tiefenkarte umfasst; die Schwerkraftrichtung eine Richtung in der Tiefenkarte ist, die mit einer Richtung der Schwerkraft in einer durch die Tiefenkarte repräsentierten Szene übereinstimmt.

14. Computerprogrammprodukt, umfassend Anweisungen, die, wenn das Programm von einem Computer ausgeführt wird, den Computer veranlassen, die Schritte des Verfahrens nach Anspruch 1 auszuführen.

**Revendications**

1. Procédé de traitement d'une carte de profondeur, le procédé comprenant :

la réception d'une carte de profondeur ;
pour au moins un premier pixel (403) de la carte de profondeur, la réalisation des étapes consistant à :

déterminer (105) un ensemble de valeurs de profondeur candidates, l'ensemble de valeurs de profondeur candidates comprenant des valeurs de profondeur pour d'autres pixels de la carte de profondeur que le premier pixel ;
déterminer (107) une valeur de coût pour chacune des valeurs de profondeur candidates dans l'ensemble de valeurs de profondeur candidates en réponse à une fonction de coût ;
sélectionner (109) une première valeur de profondeur à partir de l'ensemble de valeurs de profondeur candidates en réponse aux valeurs de coût pour l'ensemble de valeurs de profondeur candidates ;
déterminer (111) une valeur de profondeur mise à jour pour le premier pixel sur la base de la première valeur de profondeur sélectionnée ; **caractérisé en ce que**

dans lequel l'ensemble de valeurs de profondeur candidates comprend une première valeur de profondeur candidate (405) le long d'une première direction (407) à partir du premier pixel (403), et un ensemble de pixels intermédiaire (501) le long de la première direction (407) à partir du premier pixel (403), une distance allant du premier pixel (403) à la première valeur de profondeur candidate (405) étant supérieure à une distance allant du premier pixel (403) à l'ensemble de pixels intermédiaire (501), dans lequel l'ensemble de pixels intermédiaire comprend au moins un pixel et ne comprend aucune valeur de profondeur candidate de l'ensemble de valeurs de profondeur candidates pour lesquelles la fonction de coût ne dépasse pas la fonction de coût pour la première valeur de profondeur candidate (405) ; et

le procédé comprend en outre la détermination de la première direction en tant que direction de gravité pour la carte de profondeur ; la direction de gravité étant une direction dans la carte de profondeur correspondant à une direction de gravité dans une scène représentée par la carte de profondeur.

2. Procédé selon la revendication 1, dans lequel la fonction de coût le long de la première direction présente un gradient de coût augmentant de manière monotone en fonction de la distance à partir du premier pixel pour la distance étant inférieure à un seuil de distance et un gradient de coût décroissant en fonction de la distance à partir du premier pixel pour au moins une distance à partir du premier pixel étant supérieure à un seuil.

3. Procédé selon la revendication 1, dans lequel l'ensemble de pixels intermédiaire est un ensemble de pixels pour lequel des valeurs de profondeur ne sont pas incluses dans l'ensemble de valeurs candidates.

4. Procédé selon une quelconque revendication précédente, dans lequel la fonction de coût comprend une contribution de
coût dépendant d'une différence entre des valeurs d'image d'images multi-vues pour des pixels qui sont décalés par une disparité correspondant à la valeur de profondeur candidate à laquelle la fonction de coût est appliquée.

5. Procédé selon une quelconque revendication précédente, dans lequel la première direction est une direction verticale dans la carte de profondeur.

6. Procédé selon une quelconque revendication précédente comprenant en outre la détermination d'un modèle de profondeur pour au moins une partie d'une scène représentée par la carte de profondeur et dans lequel la fonction de coût pour une valeur de profondeur dépend d'une différence entre la valeur de profondeur et une valeur de profondeur de modèle déterminée à partir du modèle de profondeur.

7. Procédé selon la revendication 6, dans lequel la fonction de coût est asymétrique quant à savoir si la valeur de profondeur dépasse la valeur de profondeur de modèle ou est inférieure à la valeur de profondeur de modèle.

8. Procédé selon la revendication 6 ou 7, dans lequel le modèle de profondeur est un modèle d'arrière-plan pour la scène.

9. Procédé selon une quelconque revendication précédente comprenant en outre l'inclusion de valeurs de profondeur candidates dans l'ensemble de valeurs de profondeur candidates qui ne proviennent pas de la carte de profondeur, incluant au moins une valeur de profondeur de :

une valeur de profondeur provenant d'une autre carte de profondeur d'une séquence temporelle de cartes de profondeur, la séquence incluant la carte de profondeur ;
une valeur de profondeur indépendante d'une scène étant représentée par la carte de profondeur ; et
une valeur de profondeur déterminée en réponse à un décalage d'une valeur de profondeur pour le premier pixel.

10. Procédé selon une quelconque revendication précédente, dans lequel la fonction de coût pour une valeur de profondeur dépend d'un type de valeur de profondeur, le type étant un type parmi le groupe de types incluant au moins une valeur parmi :

une valeur de profondeur de la carte de profondeur ;
une valeur de profondeur de la carte de profondeur plus proche qu'un seuil de distance ;
une valeur de profondeur de la carte de profondeur plus éloignée qu'un seuil de distance ;
une valeur de profondeur provenant d'une autre carte de profondeur d'une séquence temporelle de cartes de profondeur, incluant la carte de profondeur ;
une valeur de profondeur présentant un décalage de valeur de profondeur indépendant de la scène par rapport à une valeur de profondeur de la première valeur de profondeur ;

une valeur de profondeur indépendante d'une scène étant représentée par la carte de profondeur ; et
une valeur de profondeur déterminée en réponse à un décalage d'une valeur de profondeur pour le premier pixel.

11. Procédé selon une quelconque revendication précédente, dans lequel le procédé est agencé pour traiter une pluralité de pixels de la carte de profondeur en sélectionnant de manière itérative un nouveau premier pixel parmi la pluralité de pixels et en réalisant les étapes pour chaque nouveau premier pixel.

12. Procédé selon la revendication 1, dans lequel l'ensemble de valeurs de profondeur candidates pour une seconde direction à partir du premier pixel ne comprend aucune seconde valeur de profondeur candidate pour laquelle un ensemble de pixels d'au moins un pixel le long de la seconde direction ne comprend aucune valeur de profondeur candidate de l'ensemble de valeurs de profondeur candidates pour lesquelles la fonction de coût ne dépasse pas la fonction de coût pour la seconde valeur de profondeur candidate, une distance allant du premier pixel à la seconde valeur de profondeur candidate étant supérieure à une distance allant du premier pixel à l'ensemble de pixels.

13. Appareil de traitement d'une carte de profondeur, l'appareil comprenant :

un récepteur (201) pour recevoir une carte de profondeur ;
un processeur (203) pour traiter la carte de profondeur, le traitement comprenant :
pour au moins un premier pixel de la carte de profondeur, la réalisation des étapes consistant à :

déterminer (105) un ensemble de valeurs de profondeur candidates, l'ensemble de valeurs de profondeur candidates comprenant des valeurs de profondeur pour d'autres pixels de la carte de profondeur que le premier pixel ;
déterminer (107) une valeur de coût pour chacune des valeurs de profondeur candidates dans l'ensemble de valeurs de profondeur candidates en réponse à une fonction de coût ;
sélectionner (109) une première valeur de profondeur à partir de l'ensemble de valeurs de profondeur candidates en réponse aux valeurs de coût pour l'ensemble de valeurs de profondeur candidates ;
déterminer (111) une valeur de profondeur mise à jour pour le premier pixel sur la base de la première valeur de profondeur sélectionnée ; **caractérisé en ce que**

dans lequel l'ensemble de valeurs de profondeur candidates comprend une première valeur de profondeur candidate (405) le long d'une première direction (407) à partir du premier pixel (403), et un ensemble de pixels intermédiaire (501) le long de la première direction (407) à partir du premier pixel (403), une distance allant du premier pixel (403) à la première valeur de profondeur candidate (405) étant supérieure à une distance allant du premier pixel (403) à l'ensemble de pixels intermédiaire (501), dans lequel l'ensemble de pixels intermédiaire comprend au moins un pixel et ne comprend aucune valeur de profondeur candidate de l'ensemble de valeurs de profondeur candidates pour lesquelles la fonction de coût ne dépasse pas la fonction de coût pour la première valeur de profondeur candidate (405) ; et
le traitement comprenant en outre la détermination de la première direction en tant que direction de gravité pour la carte de profondeur ; la direction de gravité étant une direction dans la carte de profondeur correspondant à une direction de gravité dans une scène représentée par la carte de profondeur.

14. Produit de programme informatique comprenant des instructions qui, lorsque le programme est exécuté par un ordinateur, amènent l'ordinateur à exécuter les étapes du procédé selon la revendication 1.

**FIG. 1**

201

203

205

| Rx | → | PRC | → | OUT |

**FIG. 2**

(a)                                    (b)                                    (c)

**FIG. 3**

409

401

$D_{i-1,j}^{(t)}$

$D_{i,j}^{(t-1)}$

403

$D_{i,j-1}^{(t)}$

$D_{i,j+1}^{(t)}$

401

401

$D_{i+1,j}^{(t)}$

$\Delta$

407

405

$D_{i+\Delta,j}^{(t)}$

**FIG. 4**

**FIG. 5**

**FIG. 6**

701

703

**FIG. 7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020178289 A1
- EP 3396949 A1
- WO 2009004527 A2